# EUROPEAN PATENT APPLICATION

(11) **EP 3 338 885 A1**
(43) Date of publication of application: **27.06.2018**
(21) Application number: 16382650.6
(22) Date of filing: 23.12.2016
(51) Int. Cl.: B01J 19/30

(54) **CARRIER DEVICE**

(71) Applicant: Fundacion Gaiker, 48170 Zamudio Vizcaya (ES)
(72) Inventor: CAMPO ARCAYA, Juan José, 48170 Zamudio - VIZCAYA (ES); EXTEBARRIA MERINO, Francisco Javier, 48170 Zamudio - VIZCAYA (ES)
(74) Representative: Balder IP Law, S.L.

(57) **Abstract**

The invention provides a carrier device (10) comprising an outer support (1), the outer support (1) having a first base (11) and a second base (12) opposite to the first base (11), wherein a plane (1 b) tangent to the first base (11) forms an angle contained between 10 and 80 degrees with respect to a plane (1t) which is tangent to the outer support (1) in a point belonging both to the outer support (1) and to the first base (11).

## Description

### TECHNICAL FIELD

The present invention belongs to the field of carriers which are used for conveying a biomaterial inside a fluid.

### STATE OF THE ART

Carrier devices are used in the biochemical industry as a biomass support, causing microorganisms to interact with a fluid and/or with gases which are diluted in said fluid, causing a biotransformation of the content of the fluid. These carriers are used inside reactors, which have been widely applied in many industries for various applications recently. It has been found promising to use fluidized bed reactor for water treatment procedures.

These carrier devices comprise the biomass adhered to its surface, but in such a way that this biomass is retained in this surface, so that it may fulfil its aim.

The shape of the carrier is thus essential for a better performing of the carrier inside the flow. The carrier must ensure adequate metabolism of biomass for the biotransformation of the target compounds present in the flux, and also correct attachment of this biomass, so that the less biomass particles possible are uprooted by the fluid current. Also, the maximum interchange rate is sought, so that the presence of the carrier in the fluid is more efficient. Some carriers are disclosed in documents EP 0750591 A1 or in FR 3018209 A1. These carriers are suitable for performing these actions, but its shape is not optimal for the dilution of the substance inside the flow, due to the carrier active surface being clogged by the biomass outgrowth.

### DESCRIPTION OF THE INVENTION

The invention provides an alternative solution for this problem by means of a carrier device according to claim 1. Preferred embodiments of the invention are defined in dependent claims.

In an inventive aspect, the invention provides a carrier device comprising an outer support, the outer support having a first base and a second base opposite to the first base, wherein a plane tangent to the first base forms an angle contained between 10 and 80 degrees (preferably between 15 and 80 degrees) with respect to a plane which is tangent to the outer support in a point belonging both to the outer support and to the first base.

This innovative characteristic of the design provokes that the hydrostatic pressure on the carrier surface be asymmetric in respect the axial axis, therefore generating a novel effect of rotatory movement.

This carrier device is particularly suitable for some bioprocesses, as it provides a high specific surface (the specific surface is defined for this purpose as the useful surface divided by weight of the carrier device), which allows the fluid flow to go through the carrier device and then oxygen and nutrients may reach the biomass, for better operation of the whole device.

In a particular embodiment, the first base is contained in a first base plane, and the first base plane forms an angle contained between 50 and 70 degrees with respect to a plane which is tangent to the outer support in a point belonging both to the outer support and to the first base.

This angle range is particularly advantageous, since it minimizes the clogging of the inner passages by the biomass outgrowth; due to the mechanical interaction with the fluid flux.

In some particular embodiments, the first base and the second base are contained in parallel planes.

These carrier devices are easier to manufacture, thus providing an advantage compared to other carriers. For example, they can be manufactured by injection, 3D printing or preferably by extrusion or co-extrusion. In some particular embodiments, every plane tangent to the outer support contains a line directed according a main direction.

These embodiments have a regular outer surface, which extends in a straight way from one base to the other base. The outer surface is therefore parallel to the main direction, which is the direction of the axis of the truncated cylinder formed by the outer surface.

In some particular embodiments, the first base is substantially elliptical and comprises a first main diameter and a second main diameter lower than the first main diameter, the first main diameter and the second main diameter crossing in a centre, and the distance between the plane containing the first base and the plane containing the second base is comprised between 0.1 and 1 times the first main diameter, and particularly between 0.25 and 0.5 times the first main diameter.

This size rate is particularly advantageous, since it also contributes to the hydrostatic pressure on the carrier surface being asymmetric in respect the axial axis, therefore improving the effect of rotatory movement.

In some particular embodiments, the first base and the second base form an angle contained between 50 and 70 degrees with respect to a plane which is tangent to the outer surface in a point belonging both to the outer support and to the first base.

These carrier devices with two parallel bases in a biased geometry are easy to manufacture accordingly to different thermoset and thermoplastic processes, thus providing both, technological and competitiveness advantage compared to other carriers.

In some particular embodiments, the carrier device further comprises outer protrusions extending from the outer surface.

These outer protrusions increase the specific surface of the carrier device and therefore improves the behaviour of the carrier device. Further, this makes it more difficult that different carriers get trapped with each other.

In some particular embodiments, the rate between the length of the outer protrusions, measured in the radial direction from the centre, and the first main diameter is between 0.1 and 0.2.

This relative size of the protrusions is optimal for increasing the specific surface of the carrier device.

In some particular embodiments, the carrier device further comprises inner protrusions which are attached to the outer support.

These inner protrusions also increase the specific surface of the carrier device and therefore improves the behaviour of the carrier device.

In some particular embodiments, at least one of the inner protrusions are attached to the outer support, and some of the inner protrusions form at least part of a regular or irregular polygonal prism (i.e triangular, quadrangular, pentagonal, octagonal and preferably a hexagonal prism). Further, at least some of the inner protrusions attach the edges of the polygonal prisms with the outer support. The polygonal prism can be a central protrusion joined to the outer support by means of symmetrical nerves.

This geometry of the carrier device reduces the risk of siltation.

In some particular embodiments, the outer support comprises a bevel.

Advantageously, this carrier device rotates inside a fluid due to the asymmetric pressure forces caused in different sides of the axial axis.

In some particular embodiments, the carrier device is made of ceramic, stone, clay thermoplastic or thermosetting materials. Processes dealing with plastics may use either virgin plastics or recycled plastics.

In a particular embodiment, the rugosity is adapted to provide a better attachment of any biomass particles which may be attached to the carrier device. However, it is not essential that the carrier device has a rough finishing, since it may operate with many different finishing options such as polish, mirror finish, stripped finish, electrical discharge machining, or sandblast finish.

In some embodiments, density is such that, once the biomass is grown onto the carrier device, the combination of floatability and its distribution along the reactor is optimal.

The solid geometry of this carrier device makes the carrier endure stresses due to constant friction forces between carriers and due to turbulences within the interior of the reactor.

In a particular embodiment, the carrier is an oblique cylinder (the axis of the cylinder is not perpendicular to the base) with an elliptical base, an inner polygonal shaped core and external flaps or nerves in the outer surface of the cylinder.

In a particular embodiment, the inner polygonal shaped core is based on a polygon with a side being between 4 and 6 mm long.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figures 1a and 1b show different views of a particular embodiment of a carrier device according to the invention.
Figure 2 shows a graphic which represents the flux speed through the inner hexagonal prism versus the lateral dimension of the hexagon geometry.
Figure 3 shows a graphic which represents the flux speed within polygon prism inner surface versus its length.

### DETAILED DESCRIPTION OF THE INVENTION

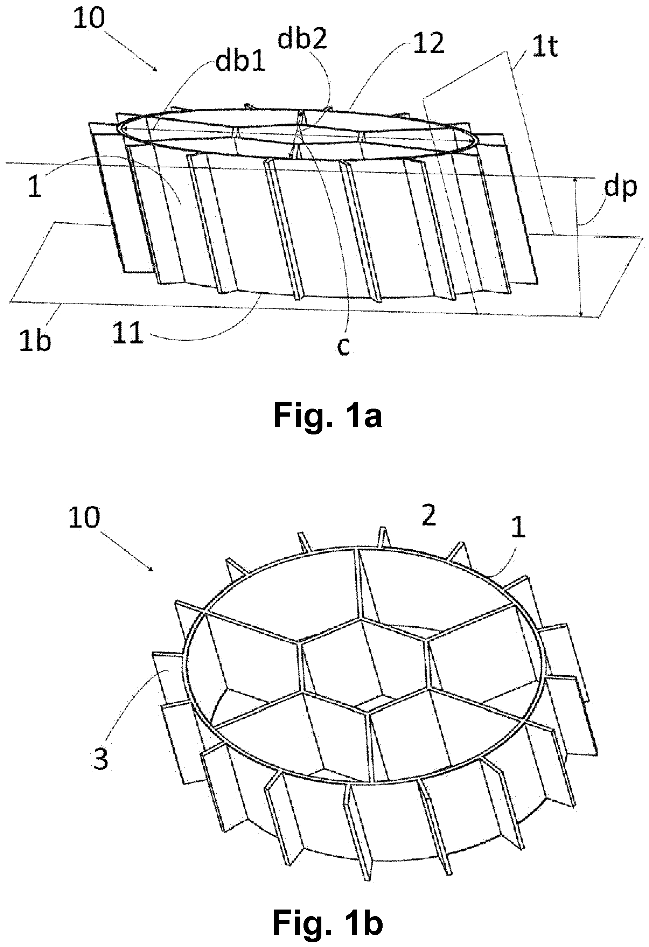

Figure 1a shows a first view of a particular embodiment of a carrier device according to the invention.

This carrier device (10) comprises an outer support (1), the outer support (1) having a first base (11) and a second base (12) opposite to the first base (11). The first base (11) is contained in a first base plane (1 b), and the first base plane (1 b) forms substantially 60 degrees with respect to a plane (1t) which is tangent to the outer support (1) in a point belonging to the first base (11).

In other embodiments, the first base (11) is not comprised in a plane. In those cases, a plane (1 b) tangent to the first base (11) forms substantially 60 degrees with respect to a plane which is tangent to the outer support (1) in a point belonging to the first base (11).

Following with the description of the shape of the carrier device (10) of figure 1, the first base (11) and the second base (12) are contained in parallel planes. Since the outer support (1) of this carrier device (1) is a portion of a cylinder, every plane tangent to the outer support (1) contains a line directed according a main direction.

In this embodiment, the first base (11) and the second base (12) are substantially identical and substantially elliptical. Both of them (although only the ones regarding the second base are shown in this figure) comprise a first main diameter (db1) and a second main diameter (db2), which is lower than the first main diameter (db1). For a better performance of the carrier device, the distance (dp) between the plane containing the first base and the plane containing the second base is comprised between 0.1 and 0.5 times the first main diameter (db1).

In figure 1b, other features of this carrier device (10) are shown. This carrier device (10) comprises inner protrusions (2), some of which are attached to the outer support (1). Other inner protrusions (2) are arranged inside the outer support (1) forming at least part of a hexagonal prism. In this embodiment, the inner protrusions forming a hexagonal prism are connected to the outer support by means of the rest of the inner protrusions.

As may be observed in this figure, the carrier device (10) further comprises outer protrusions (3) extending from the outer surface (1).

However, other materials may also be used to manufacture the carrier, such as ceramics, stone, clay or anything suitable for this purpose. The carrier may be manufactured by injection, extrusion, co-extrusion, three-dimensional printing or any other method which is suitable for this purpose.

Some experiments have been carried out with a carrier device as described in figures 1a and 1 b. The carrier was submerged in a reactor, and measurements of the biomass layer thickness were taken weekly (first measurement was taken two weeks after submerging the carrier in the reactor).

| No of measurement | Mean thickness (µm) | Max thickness (µm) | Min thickness (µm) |
|---|---|---|---|
| 1 | 141 | 185 | 120 |
| 2 | 178 | 289 | 113 |
| 3 | 201 | 281 | 165 |
| 4 | 216 | 448 | 146 |
| 5 | 188 | 248 | 100 |
| 6 | 151 | 191 | 86 |
| 7 | 232 | 403 | 154 |
| 8 | 213 | 380 | 83 |
| 9 | 198 | 380 | 122 |
| 10 | 181 | 345 | 124 |
| 11 | 189 | 329 | 115 |
| 12 | 219 | 328 | 113 |

Measurement number 12 was thus carried out 13 weeks after the carrier device was submerged into de reactor. It is remarkable that only after two weeks a biomass layer between 120 and 185 µm was consolidated, and that more than three months after the submersion, the carrier device still kept a biomass layer between 113 and 328 µm.

The particular dimensions of the carrier used for these measurements (although this does not provide essential data about the invention) were:
- circular base with a diameter of 25 mm
- hexagonal internal core, with a height of the hexagon of 10 mm
- internal surface of 2412 mm²
- total surface of 4145mm²
- number of carriers in 1 dm³: 88
- internal surface per volume: 212.26 m²/m³
- total surface per volume: 364.76 m²/m³

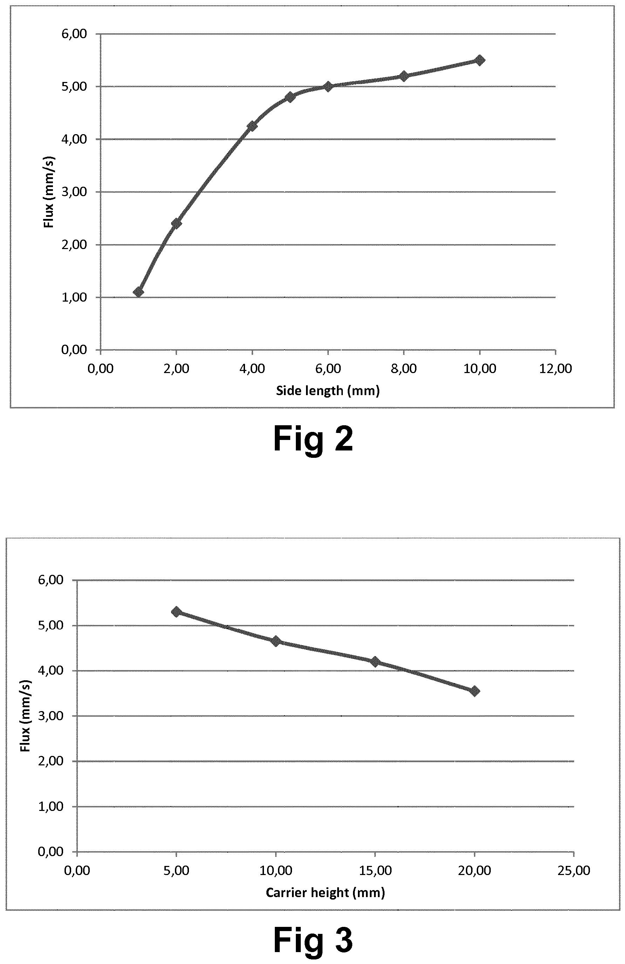

Figure 2 shows how the length of one side of the inner polygonal prism formed by some inner protrusions affects to the gradient of the carrier internal flux speed. As may be seen in this graphic, the best rate between flux per length of this side is obtained between 4 and 6 mm.

Figure 3 shows how the height of the outer surface affects to the gradient of the carrier internal flux speed. This parameter affects the optimization of the biological active surface and maximum flux speed assuring a proper nutrients turnover, achieving a further step beyond the state of the art. As may be seen in this graphic, the flux decreases with the height of the carrier device.

From the experimental data, it is shown that the flow drop is linear, with a significant charge loss in each section. In order to choose the height of the carrier device, other reasons have been considered, because the loss of flow does not compensate the length increment.

According to experimental data, the best speed range is achieved when the polygonal prism of the support is between 5 and 12.5 mm long. A minimum height is considered essential for the support to be more mechanically consistent, and also for bevelling the outer surface to achieve the pursued hydrodynamic effect.

## Claims

1. A carrier device (10) comprising an outer support (1), the outer support (1) having a first base (11) and a second base (12) opposite to the first base (11), wherein a plane (1b) tangent to the first base (11) forms an angle contained between 10 and 80 degrees with respect to a plane (1t) which is tangent to the outer support (1) in a point belonging both to the outer support (1) and to the first base (11).

2. A carrier device (10) according to claim 1, wherein the first base (11) is contained in a first base plane (1b), and the first base plane (1b) forms an angle contained between 50 and 70 degrees with respect to a plane (1t) which is tangent to the outer support (1) in a point belonging both to the outer support (1) and to the first base (11).

3. A carrier device (10) according to any of the preceding claims, wherein the first base (11) and the second base (12) are contained in parallel planes.

4. A carrier device (10) according to any of the preceding claims, wherein every plane tangent to the outer support (1) contains a line directed according a main direction.

5. A carrier device (10) according to claim 4 when depending on claim 3, wherein the first base (11) is substantially elliptical and comprises a first main diameter (db1) and a second main diameter (db2) lower than the first main diameter (db2), the first main diameter (db1) and the second main diameter (db2) crossing in a centre (c), and the distance (dp) between the plane containing the first base and the plane containing the second base is comprised between 0.1 and 1 times the first main diameter (db1), and particularly between 0.25 and 0.5 times the first main diameter (db1).

6. A carrier device (10) according to claim 3, wherein the first base (11) and the second base (12) form an angle contained between 50 and 70 degrees with respect to a plane which is tangent to the outer surface in a point belonging both to the outer support (1) and to the first base (11).

7. A carrier device (10) according to any of the preceding claims, further comprising outer protrusions (3) extending from the outer surface (1).

8. A carrier device (10) according to claim 7 when it depends on claim 5, wherein the rate between the length (Ip) of the outer protrusions (3), measured in the radial direction from the centre (c), and the first main diameter (db1) is between 0.1 and 0.2.

9. A carrier device (10) according to any of the preceding claims, further comprising inner protrusions (2) which are attached to the outer support (1).

10. A carrier device (10) according to claim 9, at least one of the inner protrusions being attached to the outer support, wherein some of the inner protrusions form at least part of a regular or irregular polygonal prism, and wherein at least some of the inner protrusions (2) attach the edges of the polygonal prisms with the outer support (1).

11. A carrier device (10) according to any of the preceding claims, wherein the outer support (1) comprises a bevel.

12. A carrier device according to claim 1 wherein the outer support (1) is an oblique cylinder, and comprises an elliptical base (11) and an outer surface, and wherein the carrier device (10) comprises an inner polygonal shaped core and outer protrusions (3) or nerves or external flaps in the outer surface of the outer support (1).

13. A carrier device according to claim 12 wherein ratio between the height of the cylinder and one diameter of the elliptical base (11) is comprised in the range from 2.5 to 3.5, and the axis of the cylinder forms an angle between 50 and 70 degrees with the elliptical base (11).

14. A carrier device according to claims 12 or 13 wherein the outer protrusions (3) or nerves or external flaps have a length 0.1 to 0.2 times the diameter of the elliptical base (11).

15. A carrier device according to claims 12 or 13, wherein the inner polygonal shaped core is based on a polygon with a side being between 4 and 6 mm long.
